# EUROPEAN PATENT APPLICATION

(11) **EP 4 379 929 A1**
(43) Date of publication of application: **05.06.2024**
(21) Application number: 22897842.5
(22) Date of filing: 23.11.2022
(51) Int. Cl.: H01M 50/244, H01M 50/258

(54) **BATTERY CELL UNIT, BATTERY, AND VEHICLE**

(30) Priority: 24.11.2021 CN 202122922163 U
(71) Applicant: BYD Company Limited, Shenzhen, Guangdong 518118 (CN)
(72) Inventor: QUO, Yongming, Shenzhen, Guangdong 518118 (CN); LANG, Xiaoqiang, Shenzhen, Guangdong 518118 (CN); CHEN, Wei, Shenzhen, Guangdong 518118 (CN); ZHOU, Yanfei, Shenzhen, Guangdong 518118 (CN); CHEN, Yaolei, Shenzhen, Guangdong 518118 (CN)
(74) Representative: DehnsGermany Partnerschaft von Patentanwälten
(86) International application number: PCT/CN2022/133706
(87) International publication number: WO 2023/093759

(57) **Abstract**

A battery core unit includes multiple battery core modules connected in series. The battery core module includes at least one battery core group and brackets arranged at two ends of the at least one battery core group. Each battery core group includes multiple battery cores stacked along a first direction, and the multiple battery cores are connected in parallel. The first direction is a thickness direction of the battery core. The bracket includes a bracket body and a conductive sheet mounted on the bracket body. At least one tab protruding hole is provided on the bracket body, and a tab of the battery core extends through the tab protruding hole and is connected to the conductive sheet. The battery core module further includes a supporting and fastening piece, and the supporting and fastening piece is arranged between the brackets at the two ends of the at least one battery core group.

## Description

### CROSS-REFERENCE TO RELATED APPLICATIONS

The present disclosure claims priority to Chinese Patent Application No. 202122922163.3, filed on November 24, 2021 and entitled "BATTERY CORE UNIT, BATTERY, AND VEHICLE", which is incorporated herein by reference in its entirety.

### FIELD

The present disclosure relates to the technical field of batteries, and more specifically, to a battery core unit and a battery.

### BACKGROUND

A conventional pouch battery is assembled from multiple battery core units stacked and fixed in a single dimension. This single-dimensional stacking connection is not conducive to improvement of the overall battery capacity. In addition, battery cores of the conventional pouch battery are connected by connection sheets and then fastened by bolts to realize the connection between the battery cores. The assembly process is complicated and inefficient. In addition, the battery cores need to be bound by steel belts after being stacked, leading to a large number of parts and high costs.

### SUMMARY

The content of the present disclosure is intended to resolve at least one of the technical problems existing in related arts.

Therefore, an embodiment of the present disclosure discloses a battery core unit, including:

multiple battery core modules. The multiple battery core modules are connected in series.

The battery core module includes at least one battery core group and brackets arranged at two ends of the at least one battery core group.

Each battery core group includes multiple battery cores stacked along a first direction, and the multiple battery cores are connected in parallel. The first direction being a thickness direction of the battery core.

The bracket includes a bracket body and a conductive sheet mounted on the bracket body. At least one tab protruding hole is provided on the bracket body, and a tab of the battery core extends through the tab protruding hole and is connected to the conductive sheet. The battery core module further includes a supporting and fastening piece, and the supporting and fastening piece is arranged between the brackets at the two ends of the at least one battery core group.

In some embodiments, the conductive sheet includes a first conductive sheet and a second conductive sheet. The first conductive sheet and the second conductive sheet are mutually connected and arranged at an angle. A tab avoiding hole is provided between the first conductive sheet and the second conductive sheet. The tab of the battery core extends through the tab protruding hole and the tab avoiding hole in sequence and is connected to the first conductive sheet.

In some embodiments, the bracket body has a first side surface, a second side surface, and a third side surface. The first side surface is a surface close to the battery core, the second side surface is a surface opposite to the first side surface and facing away from the battery core, and the third side surface is a surface parallel to a lead-out direction of the tab of the battery core and perpendicular to the first direction. The first conductive sheet is arranged on the second side surface. The second conductive sheet is arranged on the third side surface.

In some embodiments, supporting and limiting grooves are provided on the bracket body, and the supporting and fastening piece is inserted into the supporting and limiting grooves.

In some embodiments, the supporting and limiting groove are V-shaped grooves. The supporting and fastening piece is an aluminum plate.

In some embodiments, the battery core unit further includes an intermediate connection sheet respectively connected to second conductive sheets on brackets of adjacent battery core modules, where the adjacent battery core modules are connected in series by the intermediate connection sheet.

In some embodiments, the supporting and fastening piece and the battery core group are stacked and arranged along the first direction. An adhesive layer is arranged on the supporting and fastening piece, and the supporting and fastening piece is adhered to the battery core group by the adhesive layer.

In some embodiments, the bracket body is connected to the conductive sheet by a clamping structure.

In some embodiments, the at least one battery core group is one battery core group, the brackets are arranged at the two ends of the battery core group, and each bracket is provided with one conductive sheet.

A conductive sheet of a first polarity of one battery core module is connected to a conductive sheet of a second polarity of an adjacent battery core module by the intermediate connection sheet.

In some embodiments, the at least one battery core group is multiple battery core groups, the multiple battery core groups are arranged along the first direction, and the brackets are arranged at the two ends of the multiple battery core groups.

Each bracket is provided with multiple conductive sheets. A number of the conductive sheets is the same as a number of the multiple battery core groups. Adjacent conductive sheets arranged along the first direction have opposite polarities.

The battery core unit further includes intermediate connection sheet. A conductive sheet of one battery core module is connected to a conductive sheet of an adjacent battery core module by the intermediate connection sheet.

The battery core unit further includes a tail connection sheet, and the tail connection sheet is mounted on a bracket of a battery core module that serves as an end portion of the battery core unit.

In some embodiments, the tail connection sheet is integrally formed with the multiple conductive sheets on the bracket.

In some embodiments, an insulating partition portion is arranged on the bracket body, and the insulating partition portion is arranged between conductive sheets connected to different battery core groups.

In some embodiments, the tab extends through the tab protruding hole and is bent to form a bent portion, and the bent portion is connected to the conductive sheet by welding.

In some embodiments, elastic clamping buttons are provided on the bracket body, the conductive sheet is provided with clamping holes corresponding to the elastic clamping buttons, and the conductive sheets are mounted on the bracket body by the clamping holes and the elastic clamping buttons.

The battery core unit disclosed in this embodiment of the present disclosure is formed by connecting battery core modules in series, and the battery core module is composed of at least one battery core group and assembled and fastened by brackets. The battery core modules connected in series may be arranged based on an actual requirement. The battery core groups are assembled into the battery core module, to become a standardized battery core module, and standardized battery core modules may be further arbitrarily connected, based on actual requirement, in series to form battery core units with different sizes, and then form batteries with different sizes. The battery core unit in this embodiment of the present disclosure is simple to install, has high grouping efficiency, and has extremely high space utilization rate in a battery case that can be as high as 98%. In addition, the battery core modules constituting the battery core unit are highly replicable. This is convenient to form battery packs with different arrangements and standards.

An embodiment of the present disclosure further discloses a battery, including a housing. The battery further includes the battery core unit described in the embodiment of the present disclosure, and the battery core unit is accommodated in the housing.

An embodiment of the present disclosure further discloses a vehicle. The vehicle includes the battery core unit described in the embodiment of the present disclosure and a chassis structure configured for accommodating the battery core unit.

### BRIEF DESCRIPTION OF THE DRAWINGS

To describe the technical solutions of the embodiments of the present disclosure more clearly, the following briefly introduces the accompanying drawings required for describing embodiments. Apparently, the accompanying drawings in the following description show only some embodiments of the present disclosure, and a person of ordinary skill in the art may still derive other drawings from these accompanying drawings without creative efforts.
FIG. 1 is a schematic diagram of a structure of a battery according to an embodiment of the present disclosure;
FIG. 2 is a schematic diagram of a structure of a battery core unit according to an embodiment of the present disclosure;
FIG. 3 is a partial enlarged view of a part A in FIG. 2;
FIG. 4 is a schematic diagram of a structure of a battery core module according to an embodiment of the present disclosure;
FIG. 5 is an exploded view of a battery core module according to an embodiment of the present disclosure;
FIG. 6 is a schematic diagram of a structure of adj acent battery core modules that are not connected according to an embodiment of the present disclosure;
FIG. 7 is a schematic diagram of a structure of a bracket according to an embodiment of the present disclosure;
FIG. 8 is an exploded view of a bracket according to an embodiment of the present disclosure;
FIG. 9 is a cross-sectional view of the battery core module in FIG. 4 along a line A-A according to an embodiment of the present disclosure;
FIG. 10 is a schematic diagram of another structure of a battery core unit according to an embodiment of the present disclosure; and
FIG. 11 is an exploded view of a bracket of a battery core module that serves as an end portion of a battery core unit according to an embodiment of the present disclosure.

### Descriptions of reference numerals:

1. battery core unit; 2. housing; 3. battery;
10. battery core module; 11. battery core group; 12. bracket; 13. intermediate connection sheet; 14. tail connection sheet; 15. supporting and fastening piece
111. battery core; 112. tab; 113. first battery core group; 114. second battery core group;
121. bracket body; 122. conductive sheet; 123. first bracket; 124. second bracket;
1211. tab protruding hole 1212. supporting and limiting groove; 1213. elastic clamping button 1214. clamping convex button; 1215. insulating partition portion; 1216. first side surface; 1217. second side surface; 1218. third side surface;
1221. first conductive sheet; 1222. second conductive sheet; 1223. tab avoiding hole; 1224. clamping hole; 1225. clamping recess.

### DETAILED DESCRIPTION

Features and examples of embodiments of various aspects of the present disclosure are described in detail below. In the following detail descriptions, a lot of specific details are proposed, to provide a thorough understanding of the present disclosure. However, it is apparent to a person skilled in the art that the following description of embodiments is intended only by way of example to aid the understanding of the present disclosure. In drawings and the following descriptions, at least parts of the well-known structures and techniques are not shown to avoid unnecessary interference with the present disclosure. To clearly show a related member, a size of a related structure may be enlarged. In addition, features, structures or characteristics described in the following may be combined in one or more embodiments in any appropriate manner.

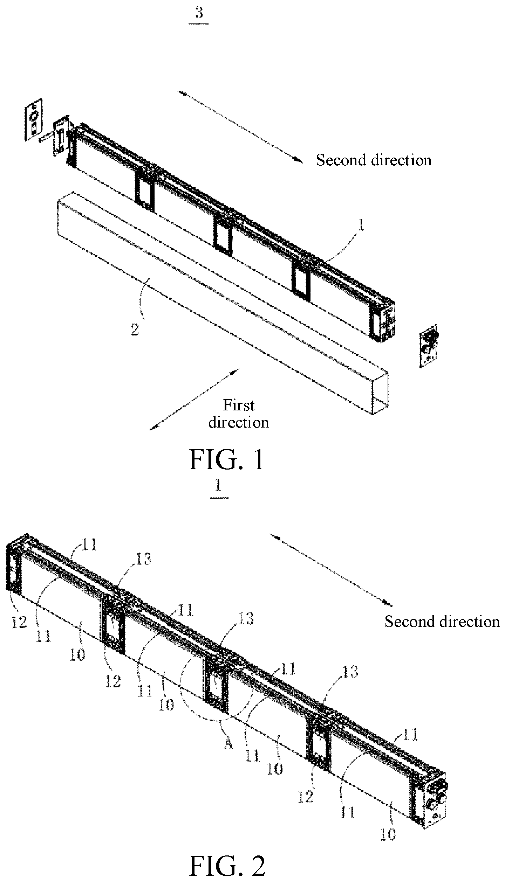

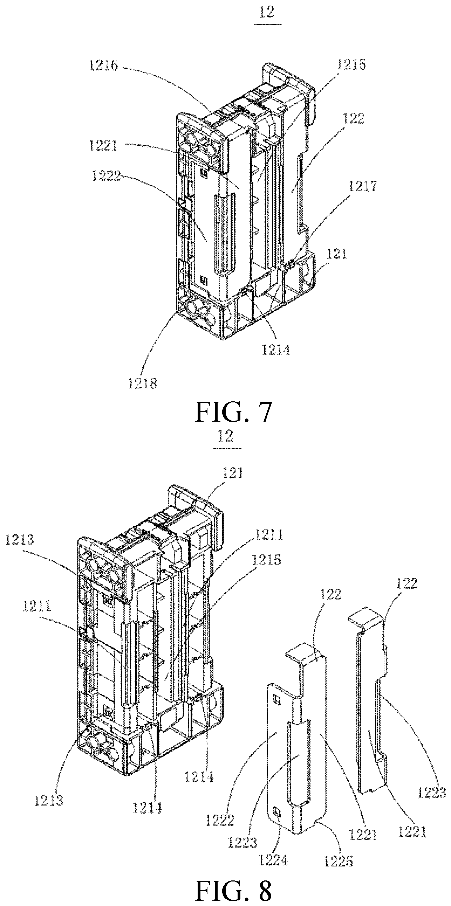

As shown in FIG. 2, a battery core unit 1 of the present disclosure includes multiple battery core modules 10 connected in series, and the battery core module 10 includes at least one battery core group 11 and brackets 12 arranged at two ends of the battery core group 11. The battery core group 11 includes multiple battery cores 111 stacked along a first direction, the battery core 111 have tabs 112, and the first direction is a thickness direction of the battery cores 111. The multiple battery cores 111 in the battery core group 11 are connected in parallel. An end portion of the battery core group 11 is an end portion of the battery core group 11 along a second direction, and the second direction is a lead-out direction of the tabs 112 of the battery core 111. As shown in FIG. 7 and FIG. 8, a bracket 12 includes a bracket body 121 and conductive sheets 122 mounted on the bracket body 121. The multiple battery cores 111 of the battery core group 11 are connected in parallel and connected to the conductive sheets 122 on the bracket 12, and conductive sheets 122 on brackets 12 of adjacent two battery core modules 10 are connected. This implements a series connection between the adjacent two battery core modules 10.

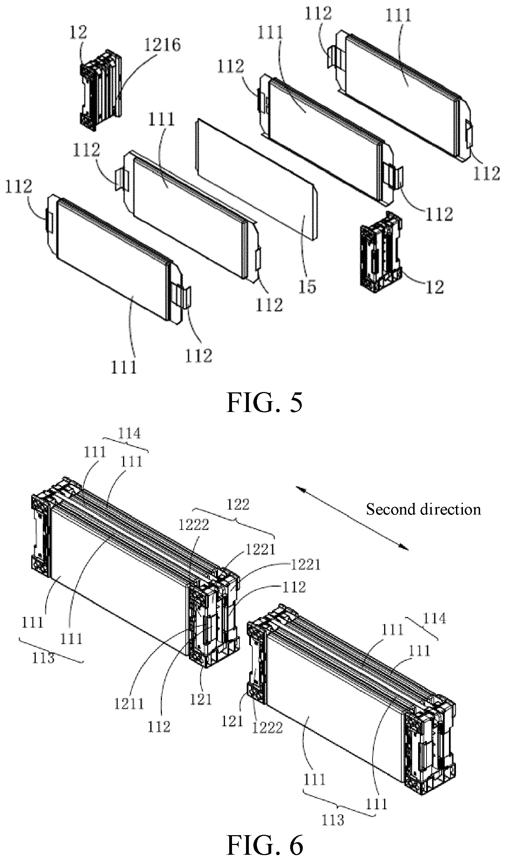

As shown in FIG. 6 and FIG. 8, tab protruding holes 1211 are provided on the bracket body 121, the tab protruding holes 1211 are provided corresponding to tabs 112 of the battery cores 111, and a number of the tab protruding holes 1211 is the same as a number of the battery cores 111 of the battery core group 11. The tabs 112 of the multiple battery cores 111 in the battery core group 11 extend through the corresponding tab protruding holes 1211 and are connected to the conductive sheets 122. The tabs 112 and the conductive sheets 122 may be connected by welding or another connection method. To ensure reliability of the connection between the tabs 112 and the conductive sheets 122, the tabs 112 extend through the corresponding tab protruding holes 1211 and are bent to form bent portions, and bent portions are welded with the conductive sheets 122. In another embodiment, the number of tab protruding holes 1211 may be the same as a number of the battery core group 11. Tabs of the multiple battery cores 111 in the battery core group 11 are first welded together to form a converged tab, to be connected in parallel, and then extend through the tab protruding hole 1211 to be connected to the conductive sheets 122.

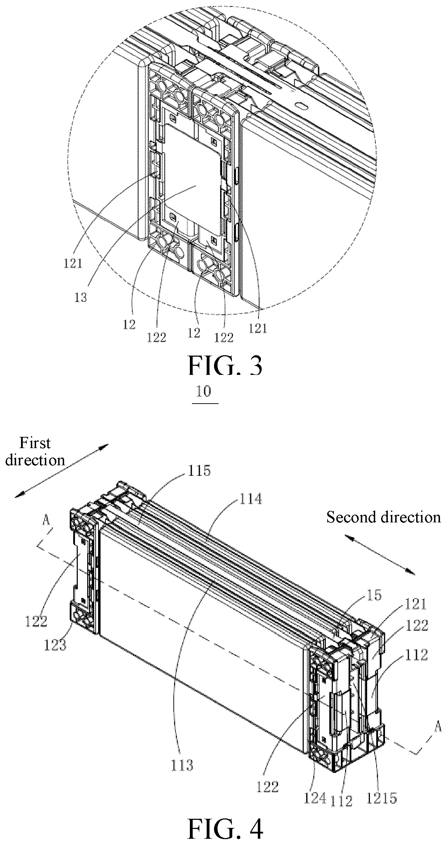

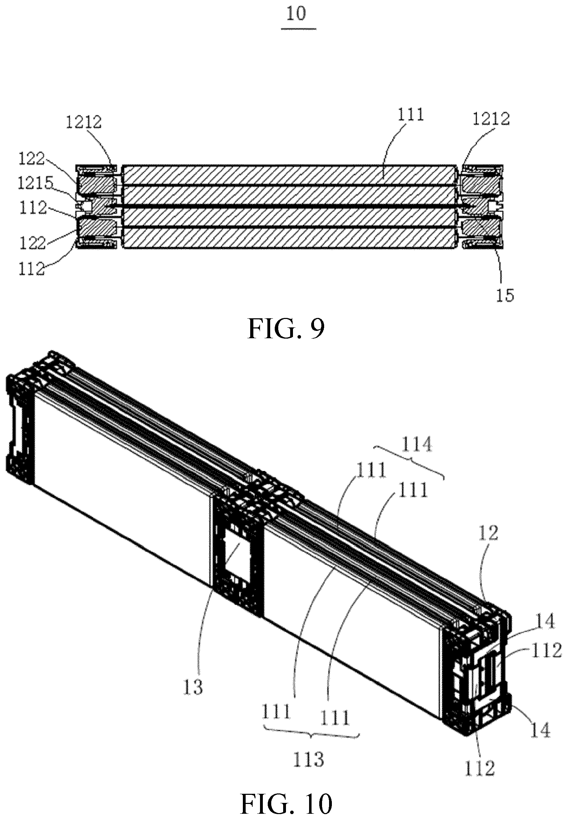

As shown in FIG. 4 and FIG. 5, a battery core module 10 further includes a supporting and fastening piece 15, and the supporting and fastening piece 15 is arranged between the brackets 12 at the two ends of the battery core group 11 to support and fasten the brackets 12. As shown in FIG. 9, supporting and limiting grooves 1212 are provided on the bracket body 12, and the supporting and fastening piece 15 is inserted into the supporting and limiting grooves 1212 to support and fasten the brackets 12 at the two ends of the battery core group 11, so that the battery core group 11 and the brackets 12 form a battery core module 10 with a stable structure. Specifically, the supporting and fastening piece 15 is an aluminum plate, and the supporting and limiting grooves 1212 are V-shaped grooves. It can be understood that another metal plate may alternatively be used for the supporting and fastening piece. The V-shaped groove is designed to facilitate clamping and fastening of the supporting and fastening piece 15. To implement a better fastening and supporting and heat dissipation effect, the supporting and fastening piece 15 and a stacking surface of the battery core 111 have a same shape and size. The stacking surface of the battery core 111 is perpendicular to the first direction. In addition, the supporting and fastening piece 15 can also avoid shock and vibration of the tabs 112 of the battery core 111 in a direction in which the tabs 112 are led out. The supporting and fastening piece 15 limits locations of the brackets 12 at the two ends of the battery core group 11, and prevents the brackets 12 from moving and causing damage to the tabs 112. An adhesive layer is arranged on the supporting and fastening piece 15, and the supporting and fastening piece 15 is adhered to the battery core group 11 by the adhesive layer. When the battery core module 10 includes multiple battery core groups 11, a supporting and fastening piece 15 may be arranged between adjacent two battery core groups 11, adhesive layers may be arranged on both sides of the supporting and fastening piece 15, and the supporting and fastening piece 15 is adhered to the adjacent battery core groups 11 by the adhesive layers. The adhesive layer is preferably hot melt adhesive, and it can be understood that a material selection of the adhesive layer is not limited to this. The adhesive layer may be provided based on an actual requirement, for example, may be provided only on one side of the supporting and fastening piece 15, or a partial area or an entire area of one side of the supporting and fastening piece 15, or a partial area or an entire area of both sides of the supporting and fastening piece 15. The supporting and fastening piece 15 implements supporting and fastening, and can transfer heat of the battery core group 11 adhered to the supporting and fastening piece 15 to an external aluminum housing, and the aluminum housing further transfers the heat to a cooling apparatus to keep a battery temperature in a suitable range.

As shown in FIG. 8, the conductive sheet 122 includes a first conductive sheet 1221 and a second conductive sheet 1222 connected to the first conductive sheet 1221. The first conductive sheet 1221 and the second conductive sheet 1222 are mutually connected and arranged at an angle. It may be understood that the first conductive sheet 1221 and the second conductive sheet 1222 may be connected by a conventional means such as welding or may be integrally formed. A tab avoiding hole 1223 is provided between the first conductive sheet 1221 and the second conductive sheet 1222. The tab avoiding hole 1223 is provided corresponding to the tab protruding hole 1211. The tab avoiding hole 1223 is provided at a junction of the first conductive sheet 1221 and the second conductive sheet 1222. When the first conductive sheet 1221 and the second conductive sheet 1222 are integrally formed, the tab avoiding hole 1223 is provided at a bending location of the first conductive sheet 1221 and the second conductive sheet 1222. Preferably, the first conductive sheet 1221 is arranged perpendicularly to the second conductive sheet 1222. In another embodiment, the first conductive sheet 1221 and the second conductive sheet 1222 may be arranged at a non-right angle. The tab 112 of the battery core 111 extends through the tab protruding hole 1211 and the tab avoiding hole 1223 in sequence and is connected to the first conductive sheet 1221.

As shown in FIG. 5 and FIG. 7, the bracket body 121 has a first side surface 1216, a second side surface 1217 and a third side surface 1218. The first side surface 1216 of the bracket body 121 is a surface close to the battery core 111. The second side surface 1217 of the bracket body 121 is a surface opposite to the first side surface 1216 and facing away from the battery core 111. The third side surface 1218 of the bracket body 121 is a surface parallel to a lead-out direction of the tab 112 of the battery core, and the third side surface 1218 is perpendicular to the first direction. The first conductive sheet 1221 is arranged on the second side surface 1217 of the bracket body 121. The second conductive sheet 1222 is arranged on the third side surface 1218 of the bracket body 121. The supporting and limiting groove 1212 is provided on the first side surface 1216 of the bracket body 121. The tab 112 of the battery core 111 of the battery core group 11 extends through the tab protruding hole 1211 and the tab avoiding hole 1223 and is welded to the first conductive sheet 1221.

As shown in FIG. 2 and FIG. 3, the battery core unit 1 further includes an intermediate connection sheet 13, and adjacent two battery core modules 10 are connected by the intermediate connection sheet 13. The intermediate connection sheet 13 is connected to second conductive sheets 1222 of the adjacent two battery core modules 10. This forms a series connection between the battery core modules 10.

As shown in FIG. 8, the conductive sheets 122 are connected to the bracket body 121 by a clamping mechanism. Specifically, elastic clamping buttons 1213 are provided on the bracket body 121, and the conductive sheet 122 is provided with clamping holes 1224 corresponding to the elastic clamping buttons 1213. The clamping holes 1224 of the conductive sheet 122 are pressed forcibly to clamp the clamping holes 1224 to outer sides of the elastic clamping buttons 1213, so that the conductive sheet 122 is mounted on the bracket body 121. Specifically, the clamping holes 1224 are provided on the second conductive sheet 1222. To further ensure mounting stability of the conductive sheet 122 and the bracket body 121, a clamping recess 1225 is further provided on the first conductive sheet 1221, and a clamping convex button 1214 corresponding to the clamping recess 1225 is provided on the bracket body 121. The clamping recess 1225 of the first conductive sheet 1221 is engaged with the clamping convex button 1214 of the bracket body 121 to further ensure stability of a connection between the conductive sheet 122 and the bracket body 121.

The multiple battery cores 111 in the battery core group 11 are adhered together by the adhesive layer. This increases rigidity and strength of the entire battery core group 11. Tabs of a same polarity of the battery cores 111 in the battery core group 11 are led out from a same direction, and the tabs of the same polarity of the battery cores 111 in the battery core group 11 are connected to the conductive sheet 122 to form a parallel relationship after being led out from the same direction. The battery core 111 has a first polarity and a second polarity. The first polarity is a negative electrode, and the second polarity is a positive electrode. Alternatively, the first polarity is positive electrode, and the second polarity is a negative electrode. Therefore, the tabs 112 of the battery core 111 are connected to the conductive sheet 122 after being led out, and the conductive sheet 122 also has the same polarity, namely, the first polarity or the second polarity, as the tab 112 of the battery core 111. Therefore, the battery core group 11 composed of the battery core 111 and the battery core module 10 also have the first polarity and the second polarity. A conductive sheet 122 of a first polarity of one battery core module 10 is connected to a conductive sheet 122 of a second polarity of another adjacent battery core module 10. This implements a series connection between adjacent two battery core modules 10. A conductive sheet 122 of a first polarity of one battery core module 10 is connected to a conductive sheet 122 of a second polarity of another adjacent battery core module 10 by an intermediate connection sheet 13.

As shown in FIG. 4 and FIG. 5, when the battery core module 10 includes multiple battery core groups 11, the multiple battery core groups 11 are arranged in the first direction. Polarities of adjacent battery core groups 11 are arranged in reverse direction. Reverse arrangement means that, for example, a first end of one battery core group 11 has a first polarity, and a second end of the battery core group 11 has a second polarity; and a first end of an adjacent battery core group 11 has a second polarity, and a second end of the adjacent battery core group 11 has a first polarity. When the battery core module 10 includes multiple battery core groups 11, a supporting and fastening piece 15 is arranged between each battery core group 11. In addition, when the battery core module 10 includes the multiple battery core groups 11, a conductive sheet 122 is respectively connected to each of two ends of each battery core groups 11. To avoid short circuit caused by reverse polarity setting of adjacent battery core groups 11, an insulating partition portion 1215 is further arranged on the bracket body 121, and the insulating partition portion 1215 is arranged between conductive sheets 122 connected to different battery core groups 11.

In an embodiment of the present disclosure, the battery core unit 1 includes multiple battery core modules 10 connected in series, the battery core module 10 includes one battery core group 11 and brackets 12 arranged at two ends of the battery core group 11, and one conductive sheet 122 is arranged on the bracket 12. Tabs 112 of a same polarity of multiple battery cores 111 in the battery core group 11 extend through a tab protruding hole 1211 of the bracket 12 and a tab avoiding hole 1223 of the conductive sheet 122, and are bent and connected to the conductive sheet 122. An intermediate connection sheet 13 is connected to a conductive sheet 122 of one polarity of one battery core group 11, and the intermediate connection sheet 13 is connected to a conductive sheet 122 of the other polarity of an adjacent battery core group 11. Adjacent battery core modules 10 are connected in series by the intermediate connection sheet 13.

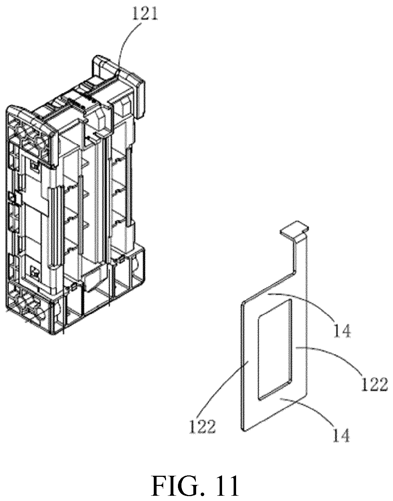

In an embodiment of the present disclosure, a battery core unit 1 includes multiple battery core modules 10 connected in series, and the battery core module 10 includes multiple battery core groups 11 and brackets 12 arranged at two ends of each of the battery core groups 11. The multiple battery core groups 11 are arranged along a first direction. A plurality of conductive sheets 122 are arranged on the bracket 12. A number of the conductive sheets 122 is the same as a number of the plurality of battery core groups 11. Adjacent conductive sheets 122 arranged along the first direction have opposite polarities. A conductive sheet 122 of one battery core module 10 is connected to a conductive sheet 122 of another adjacent battery core module 10 by an intermediate connection sheet 13. The battery core unit 1 further includes a tail connection sheet 14, and the tail connection sheet 14 is mounted on a bracket 12 of a battery core module 10 that serves as an end portion of the battery core unit 1. The tail connection sheet 14 can connect different polarities of the battery core module 10 that serve as the end portion of the battery core unit 1, to implement a series connection of the entire battery core unit. The tail connection sheet 14 may be a transverse connection sheet or a straight connection sheet. The tail connection sheet 14 is connected to the multiple conductive sheets on the bracket 12. Further, as shown in FIG. 10 and FIG. 11, the tail connection sheet 14 may be integrally formed with the multiple conductive sheets 122 on the bracket 12. As shown in FIG. 11, there are two tail connection sheets 14. A specific number of tail connection sheets 14 is not limited to this.

As shown in FIG. 4, specifically, the battery core module 10 includes two battery core groups 11 and brackets 12 arranged at two ends of the battery core group 11. A number of battery core groups 11 is not limited to this, and may be increased based on an actual requirement. As shown in FIG. 4 and FIG. 5, that the battery core module 10 includes two sets of battery core groups 11 is used as an example for description. The battery core module 10 includes a first battery core group 113 and a second battery core group 114, and each of the first battery core group 113 and the second battery core group 114 includes multiple battery cores 111. The battery core module 10 also includes brackets 12 that are arranged at two ends of the first battery core group 113 and the second battery core group 114 at the same time and that include a first bracket 123 and a second bracket 124. The first bracket 123 and the second bracket 124 have a same structure and are arranged opposite to each other. Two conductive sheets 122 are arranged on each of the first bracket 123 and the second bracket 124. Tabs 112 of a first polarity of the multiple battery cores 111 in the first battery core group 113 extend through a tab protruding hole 1211 of the first bracket 123 and the tab avoiding hole 1223 of one conductive sheet 122, and are bent and connected to the conductive sheet 122. Tabs 112 of a second polarity of the multiple battery cores 111 in the second battery core group 114 extend through a tab protruding hole 1211 of the first bracket 123 and a tab avoiding hole 1223 of the other conductive sheet 122, and are bent and connected to the other conductive sheet 122. A specific connection manner between the tabs 112 of the battery cores 111 and the conductive sheet 122 after the tabs 112 are led out may be welding or another connection manner that can implement an electrical connection. In addition, tabs 112 of a second polarity of the multiple battery cores 111 in the first battery core group 113 extend through a tab protruding hole 1211 of the second bracket 124 and a tab avoiding hole 1223 of one conductive sheet 122, and are bent and connected to the conductive sheet 122. Tabs 112 of a first polarity of the multiple battery cores 111 in the second battery core group 114 extend through a tab protruding hole 1211 of the second bracket 124 and a tab avoiding hole 1223 of the other conductive sheet 122, and are bent and connected to the other conductive sheet 122. As shown in FIG. 4 and FIG. 9, the first bracket 123 and the second bracket 124 are arranged opposite to each other. Supporting and limiting grooves 1212 are provided on the first bracket 123 and the second bracket 124, and a supporting and fastening piece 15 is inserted into the supporting and limiting groove 1212 of the first bracket 123 and the supporting and limiting groove 1212 of the second bracket 124 to support and fasten the battery core module 10. The supporting and fastening piece 15 is disposed at an intermediate location of the battery core module 10, namely, between the first battery core group 113 and the second battery core group 114. The supporting and fastening piece 15 is an aluminum plate, both sides of the aluminum plate are provided with adhesive layers, and the aluminum plate is adhered to the first battery core group 113 and the second battery core group 114 by the adhesive layers. The adhesive layer may be provided based on an actual requirement, for example, may be provided only on one side of the aluminum plate, or a partial area or an entire area of one side of the aluminum plate, or a partial area or an entire area of both sides of the aluminum plate. After battery core module 10 are assembled, multiple adjacent battery core modules 10 are connected by intermediate connection sheets 13. End portions of opposite polarities of adjacent battery core modules 10 are connected by the intermediate connection sheet 13. For example, an intermediate connection sheet 13 is connected to a conductive sheet 122 of a first polarity of a battery core module 10, and, the intermediate connection sheet 13 is also connected to a conductive sheet 122 of a second polarity of an adjacent battery core module 10, to implement a series connection of battery core groups 11 in adjacent battery core modules 10. When the battery core module 10 includes the multiple battery core groups 11, the battery core unit 1 further includes a tail connection sheet 14. The tail connection sheet 14 is arranged on a second side surface 1217 of a bracket 12 of a battery core module 10 that serves as an end portion of the battery core unit 1. The tail connection sheet 14 connects tabs of opposite polarities of battery core groups 11 of the battery core module 10 that serves as the end portion of the battery core unit 1, to implement an overall series connection of multiple battery core modules 10.

The battery core modules 10 connected in series in the present disclosure may be arranged based on an actual requirement. The battery core groups 11 are assembled into the battery core module 10, to become a standardized battery core module 10, and standardized battery core modules may be further arbitrarily connected, based on actual requirement, in series to form battery core units with different sizes, and then form batteries with different sizes. The battery core unit of the present disclosure is simple to install, has high grouping efficiency, and has extremely high space utilization rate in a battery case that can be as high as 98%. In addition, the battery core modules constituting the battery core unit are highly replicable. This is convenient to form battery packs with different arrangements and standards.

As shown in FIG 1, the present disclosure further discloses a battery 3, which includes the battery core unit 1 of any of the foregoing embodiments and a housing 2 configured for accommodating the battery core unit 1. The present disclosure further discloses a vehicle, including the battery core unit 1 of any of the foregoing embodiments and a chassis structure configured for accommodating the battery core unit 1.

Orientation terms appearing in the description of the present disclosure means directions shown in the figures and are not intended to limit a specific structure of the present disclosure. In addition, unless otherwise explicitly specified or defined, the terms such as "mount" and "connect" should be understood in a broad sense. For example, a connection may be a fixed connection, a detachable connection, or an integral connection; or a connection may be a direct connection, or an indirect connection. A person of ordinary skill in the art may understand specific meanings of the foregoing terms in the present disclosure according to specific situations.

The foregoing embodiments show only several implementations of the present disclosure and are described in detail, which, however, are not to be construed as a limitation to the patent scope of the present disclosure. It should be noted that for a person of ordinary skill in the art, several transformations and improvements can be made without departing from the idea of the present disclosure. These transformations and improvements belong to the protection scope of the present disclosure. Therefore, the protection scope of the patent of the present disclosure shall be subject to the appended claims.

## Claims

1. A battery core unit (1), comprising:
a plurality of battery core modules (10), the plurality of battery core modules (10) being connected in series;
each of the battery core module (10) comprising at least one battery core group (11) and brackets (12) arranged at two ends of the at least one battery core group (11); each battery core group (11) comprising a plurality of battery cores (111) stacked along a first direction, and the plurality of battery cores (111) being connected in parallel; the first direction being a thickness direction of the battery core (111);
the bracket (12) comprising a bracket body (121) and a conductive sheet (122) mounted on the bracket body (121); at least one tab protruding hole (1211) being provided on the bracket body (121), and a tab (112) of the battery core (111) extending through the tab protruding hole (1211) and being connected to the conductive sheet (122); and the battery core module (10) further comprising a supporting and fastening piece (15), the supporting and fastening piece (15) being arranged between the brackets (12) at the two ends of the at least one battery core group (11).

2. The battery core unit (1) according to claim 1, wherein
the conductive sheet (122) comprises a first conductive sheet (1221) and a second conductive sheet (1222); the first conductive sheet (1221) and the second conductive sheet (1222) are mutually connected and arranged at an angle;
a tab avoiding hole (1223) is provided between the first conductive sheet (1221) and the second conductive sheet (1222); and
the tab (112) of the battery core (111) extends through the tab protruding hole (1211) and the tab avoiding hole (1223) in sequence and is connected to the first conductive sheet (1221).

3. The battery core unit (1) according to claim 2, wherein
the bracket body (121) has a first side surface (1216), a second side surface (1217), and a third side surface (1218); the first side surface (1216) is a surface close to the battery core (111), the second side surface (1217) is a surface opposite to the first side surface (1216) and facing away from the battery core (111), and the third side surface (1218) is a surface parallel to a lead-out direction of the tab of the battery core (111) and perpendicular to the first direction;
the first conductive sheet (1221) is arranged on the second side surface (1217); and the second conductive sheet (1222) is arranged on the third side surface (1218).

4. The battery core unit (1) according to claim 2 or 3, further comprising:
an intermediate connection sheet (13) respectively connected to second conductive sheets (1222) on brackets (12) of adjacent battery core modules (10), wherein the adjacent battery core modules (10) are connected in series by the intermediate connection sheet (13).

5. The battery core unit (1) according to any one of claims 1 to 4, wherein
supporting and limiting grooves (1212) are provided on the bracket body (121), and the supporting and fastening piece (15) is inserted into the supporting and limiting grooves (1212).

6. The battery core unit (1) according to claim 5, wherein
the supporting and limiting grooves (1212) are V-shaped grooves; and the supporting and fastening piece (15) is an aluminum plate.

7. The battery core unit (1) according to any one of claims 1 to 6, wherein
the supporting and fastening piece (15) and the battery core group (11) are stacked and arranged along the first direction; and
an adhesive layer is arranged on the supporting and fastening piece (15), and the supporting and fastening piece (15) is adhered to the battery core group (11) by the adhesive layer.

8. The battery core unit (1) according to any one of claims 1 to 7, wherein
the bracket body (121) is connected to the conductive sheet (122) by a clamping structure.

9. The battery core unit (1) according to any one of claims 1 to 3, or claims of 5 to 8, wherein
the at least one battery core group (11) is one battery core group (11), the brackets (12) is arranged at the two ends of the battery core group (11), and each bracket (12) is provided with one conductive sheet (122);
the battery core unit (1) further comprising an intermediate connection sheet (13); and a conductive sheet of a first polarity of one battery core module (10) being connected to a conductive sheet (122) of a second polarity of an adjacent battery core module (10) by the intermediate connection sheet (13).

10. The battery core unit (1) according to any one of claims 1 to 3, or claims of 5 to 8, wherein
the at least one battery core group (11) is a plurality of battery core groups (11), the plurality of battery core groups (11) are arranged along the first direction, and the brackets (12) are arranged at the two ends of the plurality of battery core groups (11);
each bracket (12) is provided with a plurality of conductive sheets (122); a number of the conductive sheets (122) being the same as a number of the plurality of battery core groups (11); adjacent conductive sheets (122) arranged along the first direction having opposite polarities;
the battery core unit (1) further comprising an intermediate connection sheet (13); a conductive sheet (122) of one battery core module (10) being connected to a conductive sheet (122) of an adjacent battery core module (10) by the intermediate connection sheet (13); and
the battery core unit (1) further comprising a tail connection sheet (14), and the tail connection sheet (14) being mounted on a bracket (12) of a battery core module (10) that serves as an end portion of the battery core unit (1).

11. The battery core unit (1) according to claim 10, wherein
the tail connection sheet (14) is integrally formed with the plurality of conductive sheets (122) on the bracket (12).

12. The battery core unit (1) according to claim 10 or 11, wherein
an insulating partition portion (1215) is arranged on the bracket body (121), and the insulating partition portion (1215) is arranged between conductive sheets (122) connected to different battery core groups (11).

13. The battery core unit (1) according to any one of claims 1 to 12, wherein
the tab (112) extends through the tab protruding hole (1211) and is bent to form a bent portion, and the bent portion is connected to the conductive sheet (122) by welding.

14. The battery core unit (1) according to any one of claims 1 to 13, wherein
elastic clamping buttons (1213) are provided on the bracket body (121), the conductive sheet (122) is provided with clamping holes (1224) corresponding to the elastic clamping buttons (1213), and the conductive sheets (122) are mounted on the bracket body (121) by the clamping holes (1224) and the elastic clamping buttons (1213).

15. A battery (3), comprising a housing (2), the battery (3) further comprising the battery core unit (1) according to any one of claims 1 to 14, and the battery core unit (1) being accommodated in the housing (2).

16. A vehicle, comprising the battery core unit (1) according to any one of claims 1 to 14 and a chassis structure configured for accommodating the battery core unit (1).
